# EUROPEAN PATENT SPECIFICATION

(11) **EP 2 051 125 B1**
(45) Date of publication and mention of the grant of the patent: **26.11.2014**
(21) Application number: 07118681.1
(22) Date of filing: 17.10.2007
(51) Int. Cl.: G02B 26/02, G02F 1/35

(54) **Optical limiter device and an optical arrangement comprising said device**
Optische Begrenzungsvorrichtung und optische Anordnung mit dieser Vorrichtung
Dispositif de limitation optique et agencement optique comprenant ledit dispositif

(43) Date of publication of application: 22.04.2009
(73) Proprietor: SAAB AB, 581 88 Linköping (SE)
(72) Inventor: Gårdbäck, Elisabeth, 431 60, MÖLNDAL (SE); Elg, Alf-Peter, 517 37, BOLLEBYGD (SE)
(74) Representative: Zacco Sweden AB

(56) References cited:
- US-A- 5 080 469
- US-A1- 2003 189 758
- DE ARAÚJO CID ET AL: "Giant third-order nonlinearity of lead and germanium based films in the visible and in the infrared" JOURNAL OF APPLIED PHYSICS, AMERICAN INSTITUTE OF PHYSICS. NEW YORK, US, vol. 101, no. 6, 27 March 2007 (2007-03-27), pages 66103-66103, XP012098171 ISSN: 0021-8979

## Description

### TECHNICAL FIELD

This invention relates to an optical limiter device and an optical arrangement comprising such an optical limiter device

### BACKGROUND ART

Existing optical limiting devices comprise two lenses arranged so that an intermediate image is formed in a perpendicular plane between them. In the intermediate image plane is an optical limiter disposed. The limiter can be of several different materials. Optical limiters are for example known in documents US-A- 5,080,469, US-A-5,805,326 and US-B1-6,297,918.

Oculars are known that comprises a non linear attenuator device. US-A-5,797,050 discloses such an ocular, where attenuation of bright parts of scenery is obtained.

US 2003/0189758 A1 describes a multilayer nonlinear dielectric optical structure. An experimental set up for measuring the properties of the nonlinear dielectric optical structure is disclosed.

The article of DE ARAÚJO CID ET AL:"Giant third-order nonlinearity of lead and germanium based films in the visible and in the infrared" JOURNAL OF APPLIED PHUSICS, AMERICANS INSTITUTE OF PHYSICS, NEW YORK, US, vol. 101, no. 6, 27 March 2007 (2007-03-27), pages 66103-1 - 66103-3 discloses an experimental setup of a sample of a non linear element between two lenses.

US 5080469 relates to an optical limiter and to protection of eyes and sensors.

### OBJECT AND PROBLEM

The described existing devices are not applicable to cameras, binocular or sensor devices, oculars or optical systems in general. The existing optical limiting devices are built into existing optical systems. This is a complicated operation. To achieve good optical limiting properties, it is important to have high intensity inside the limiter material, therefore a small point spread function, is desired. One of the problems with known limiter materials is that they have high linear absorption. The limiter material needs to be kept as thin as possible to limit the absorption losses. I order to provide an optical limitation in a thin limiter material, accurate focusing is essential. A more accurate focusing also provides a higher intensity in the intermediate image and this provides for better limitation properties since a non linear material in many cases has a threshold can begin its limiting more accurately. This is difficult to achieve with an inbuilt device since the optical system, e.g. binocular or camera, ocular or sensor device, is generally not designed to provide optimal intermediate images. Instead, optical systems are optimized with regard to the image plane, i.e. the plane where the image to be treated is formed, e.g. the film plane in a camera. Another problem with the solution incorporated optical limiter into a passive optical system is that the focusing position in the image plane is often changed when the temperature is altered. This has the effect that the intermediate focus for the limiter is changed without any control, giving effects which decrease or destroy the ability to limit. This means that for optimal operation of the limiting material, a refocusing must be performed to meet the focus change. Generally, an optical system, such as a binocular, camera, ocular, or sensor device, is not adapted to perform such refocusing in a plane where an intermediate image is formed. This means that the optical limiter's performance is degraded as the focus in the intermediate image is changed.

One of the objects of the present invention is to provide an optical limiter that can be fitted to existing equipment, which reduces the intensity above a certain level of intensity.

### SUMMARY OF THE INVENTION

To reduce at least some of the failings discussed above the solution comprising the features of claim 1 is proposed.

Said optical limiter device provides ability to accurately focus the incoming electromagnetical waves so that a well focused intermediate image is provided. This provides for more optimal use of the non limiter material, and the possibility to refocus, should that be necessary. Refocusing can be performed with out altering of the focus of the optical equipment that the optical limiter device is set to protect. The optical limiter devices with the individually adjustable focus of said first lens device provides for a reduced thickness of the optical limiter element in said optical limiter.

The optical limiter device is arranged so that the second lens device's focus can be adjusted independently so that the waves leaving the optical limiter device can be adjusted to have substantially the same angle to the optical axis as the waves inciding to the optical limiter device.

This has the effect that it is possible to adjust the optical limiter device in a manner so that the optical limiter device perturb the incoming electromagnetical waves as little as possible.

In one embodiment a joint locking mechanism is comprised so that when the locking mechanism is locked the focusing of one of the lens devices generates a focusing of the other lens device.

This has the effect that the focusing of the two lens devices can be performed in the same operation.

In one embodiment first lens device comprises an objective.

In one embodiment the second lens device comprises an objective.

The optical limiter device is arranged to comprise means to be detachably mountable on an optical system such as a camera, a binocular, night vision goggles an optical sight or glasses.

This has the effect that the limiter can be detached and used on several optical systems. It also makes it easier for a user to clean and perform maintenance on the optical limiter.

In one embodiment said means comprises a screw and clamp arrangement.

In one embodiment said means comprises a clamp and hook arrangement.

In one embodiment said means comprises a hook and loop arrangement.

In one embodiment said means comprises a thread arranged adjacent said second lens device for mounting on an optical device.

Accordingly any optical device can be equipped with said optical limiter device. This yields a powerful, efficient and yet economic solution to limit high intensity electromagnetical waves in an existing device.

In the proposed optical limiter device the electromagnetic waves leaving said optical limiter device has essentially the same direction as the inciding waves unless the waves entering has an intensity over a certain predetermined level.

This has the effect that the optical limiter device is not interfering with the device it's set to protect. When incoming radiation having intensity above this level enters, the optical limiter device reduces the intensity of the incoming radiation and a good protection is offered to the equipment or eye on which the optical limiter device is fitted.

In one embodiment is an optical limiter provided wherein said non linear device is activated at a predetermined intensity level.

In one embodiment is an optical limiter provided wherein the electromagnetical waves that are processed is comprised throughout the electromagnetical spectrum.

One embodiment comprises an optical arrangement comprising an optical limiter device of the mentioned embodiments, the arrangement comprises an optical system such as a camera, a binocular, or night vision goggles wherein said optical limiter device's focus is adjustable independently of the focus of the optical device.

### BRIEF DESCRIPTION OF THE DRAWINGS

Fig. 1a discloses an optical system of the prior art with an intermediate image plane defined.
Fig. 1b discloses a graph of the focusing in the plane of the intermediate images of Fig. 1a.
Fig. 2 discloses an optical system comprising an embodiment of the present invention, with an intermediate image.
Fig. 3a discloses an optical system comprising an embodiment of the present invention.
Fig. 3b discloses a graph of the focusing in the plane of the intermediate image of the present invention.
Fig. 4 discloses an embodiment of an optical limiter of the invention in arranged on a conventional camera.
Fig. 5 discloses an embodiment of an optical limiter of one embodiment of the invention, in front of an eye.
Fig. 6 discloses an embodiment of an optical limiter of one embodiment of the invention, arranged on a sight.

### DETAILED DESCRIPTION

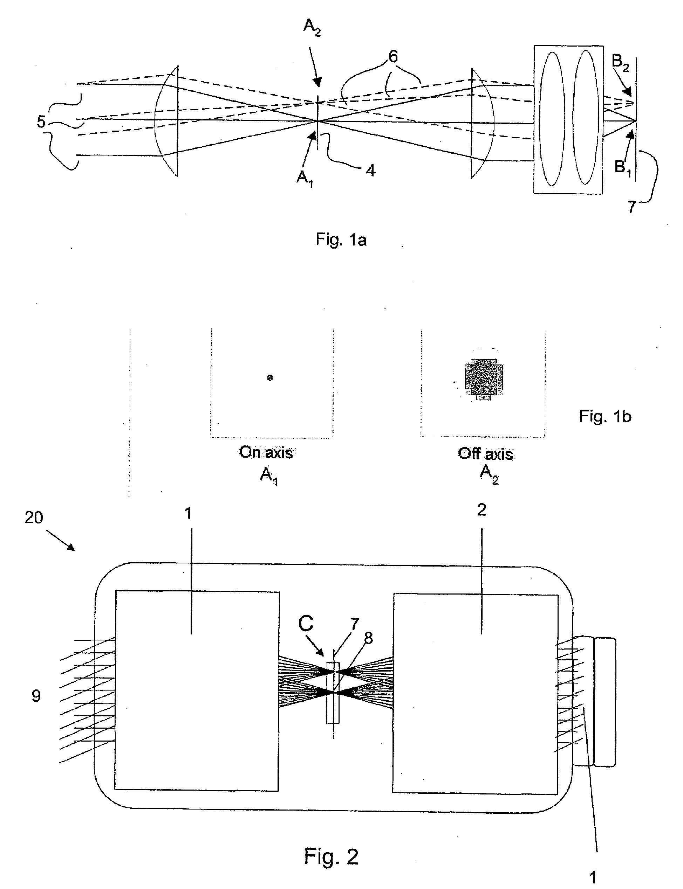

Fig. 1 a discloses in a schematic way a prior art lens system where an intermediate image A1, A2 is formed in a plane 4. One first group 5 of incident rays, is disclosed, they provide an intermediate focus which is disclosed as A1, see Fig. 1 b. As can be seen these rays 5 has a direction which is essentially parallel to the optical axis of the lens system. However this is of course only schematic and objects with in a close range of the prior art system will incide with converging rays. In Fig. 1b the small point in the left graph represents the focal plane 4 of the intermediate image A1 of the incoming rays 5. A second group of rays 6 inciding with an angle with regard to the lens system direction are represented in Fig. 1 a. These rays 6 form an intermediate image A2 in the plane 4 that is less accurately focused than the previous group of rays 5. This can be seen as the bigger spot in the schematic Fig. 1 b. As can be seen from Fig 1b the focusing of the intermediate image is scattered over a large area, this is due to the bad focusing and aberrations. This means that the intensity by area unit is much lower than for the rays 5 coming in parallel to the optical axis of the lens system, A1. This means that this prior art system has problems to achieve the desired intensity in the intermediate image for other than certain incoming rays. This in turn means that a non linear material placed in the intermediate image plane 4 has difficulties to perform accurately.

In Fig.2 a preferred embodiment of an optical limiter device 20 is disclosed. An optical limiter device 20 is provided with a first focusing unit 1 and a second focusing unit 2. In an intermediate image plane 3 the incident rays 9 converges to a focusing point 8, and the outgoing rays 10 diverge into the second focusing unit 2. Since the first focusing unit 1 can provide a good tight focus of the incident rays 9 so that a small focusing point 8 is achieved in the focal plane 7, the intensity of the incident rays 9 in the non linear optical limiter element 3 is essentially maximized. The second focusing unit 2 process' the diverging rays exiting the focal plane 7 in a substantially reversed manner compared to the first focusing unit 1. The rays 10 exiting the optical limiter device 20 exit with an essentially unchanged direction compared to the incident rays 9. Since the first and second focusing units 1, 2 are focusable independently the optimum performance of the optical limiter device 20 is obtained, i.e. the intensity in the optical limiter element 3 is maximized, and the rays 10 exiting the optical limiter device 20 is processed to have a good quality for further use in the optical equipment or eye that follows. Focus in the focal plane 7 can be maintained even if the temperature of the surroundings changes, by refocusing of the focusing unit 1. And the processing of the diverging rays in the second focusing unit can be optimized by refocusing of the second focusing unit 2. The optical limiter element 3 is positioned essentially centered with regard to the focusing point 8, so that the intermediate image C, and focusing point 8 is positioned within said optical limiter element 3. The optical limiter element 3 is made from a non linear optical limiter material.

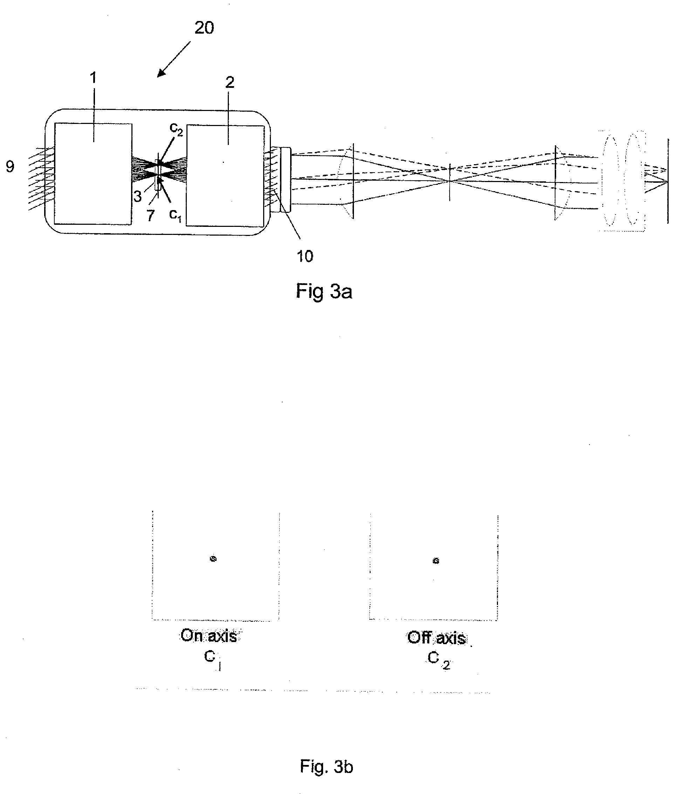

In Fig. 3a discloses one preferred embodiment where the first and the second cooperating focusing units 1, 2, provides for the formation of an intermediate image C1, C2 with very high performance as well as delivering rays 10, to the protected optical system, with good quality. In Fig 3b the focusing of the intermediate images C1, C2 are disclosed. As can be seen in Fig. 3b both the rays which are parallel with the optical axis and the rays inciding with an angle are very well focused. In this embodiment there are also provided an optical limiter element 3. It is positioned as mentioned above centrally so as to be positioned where the focusing points are and where the intensity is essentially maximal.

The focusing units 1, 2 above are preferably lens devices. The focusing of the focusing units is performed in any manner known to the person skilled in the art. In one embodiment they are objectives comprising several lenses.

The focusing of the lens devices can be performed individually. I.e the focusing can be performed individually without interaction between the two lens devices. For example by altering the distance of the lens device's individually with regard to the focusing plane. Internal focusing in the lens devices is preferable.

In one embodiment the two focusing units comprised of two lens devices, have a joint locking mechanism, that can is manually operated. The Joint locking mechanism could for example be a slidable housing which in a first position only acts one the lens devices and when slid acts on both lens devices. When in this second mode the both focusing mechanisms of the lens devices of the focusing units acts dependently of each other.

I manner of operating the optical limiter device 20 could be, adjust the first lens device so that a good intermediate image is provided, adjust the second lens device to arrive at essentially non perturbed groups of exiting rays, and then actuating said locking mechanism for further adjustments of both lens devices at the same time. Of course one can imagine operating manners where the locking mechanism is not used for further adjustments.

Even though the embodiments above and the accompanying figures discloses parallel groups of rays of electromagnetical ways inciding and exiting the optical limiter device 20, in reality waves from close objects will be converging and not parallel. The optical limiter device 20 is of course arranged to handle rays of electromagnetical waves inciding from all distances, and not only rays inciding from long distances where the rays are essentially parallell.

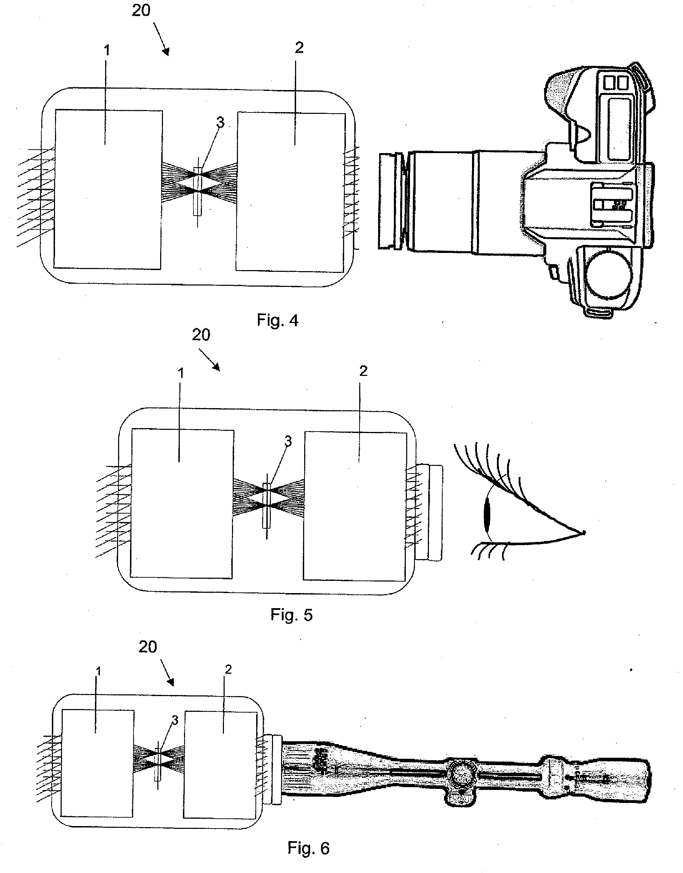

The optical limiter device 20 of the preferred embodiment can preferably be used in several different applications, for example as a protection for a camera Fig. 4, eye protection Fig. 5 and protection in a sight Fig. 6. In another embodiment a protection for any sensor system is provided.

The optical limiter device 20 together with the optical system is an optical arrangement comprising an optical limiter device of the mentioned embodiments, the arrangement comprises an optical system such as a camera, a binocular, or night vision goggles wherein said optical limiter device's focus is adjustable independently of the focus of the optical device.

To attach the optical limiter device 20 in these different application several different techniques can apply, such as a screw and clamp arrangement, a hook and loop arrangement, a clamp and hook arrangement. Within the scoop other ways of attaching is of course possible such as incorporating a thread arranged adjacent said second lens device for mounting on said optical device. When the optical limiter device 20 in any embodiment above is used alone in front of the human eye, several ways of attachment for convenient use can be imagined. It's of course possible to hold the device for a shorter period. But attachment on glasses or other more stable attachment is preferred.

## Claims

1. Optical limiter device (20), comprising a non linear limiter element (3), one first lens device and one second lens device, said first lens device is arranged to receive beams of electromagnetic waves and refract said electromagnetic waves, said second lens is arranged to essentially refract said electromagnetic waves in an essentially reverse manner, said non linear limiting element (3) is arranged to be positioned in a position between said lens devices, this position being a focus (8) of said first and said second lens device **characterized in that** said first lens device's focus (8) can be independently adjustable with respect to the second lens, which independent adjustment, in use, provides for an optimal intermediate image substantially in a plane comprised in the non linear limiter element, and wherein said second lens device's focus can be adjusted independently so that the electromagnetic waves leaving the optical limiter device (20) can be adjusted to have substantially the same angle to the optical axis as the electromagnetic waves inciding to the optical limiter device (20), and wherein the optical limiter device (20) comprises means to allow the optical limiter device to be detachably mountable on a camera, a binocular, a night vision goggle, an optical sight or glasses.

2. Optical limiter device (20) according to claim 1 where in a joint locking mechanism is comprised so that when the locking mechanism is locked the focusing of one of the lens devices generates a focusing of the other lens device.

3. Optical limiter device (20) according to any of claims 1-2 where in the first lens device comprises an objective.

4. Optical limiter device (20) according to any of claims 1-3 where in the second lens device comprises an objective.

5. Optical limiter device (20) according to any of claims 1-4 wherein said means comprises a screw and clamp arrangement.

6. Optical limiter device (20) according to any of claims 1-4 wherein said means comprises a clamp and hook arrangement.

7. Optical limiter device (20) according to any of claims 1-4wherein said means comprises a hook and loop arrangement.

8. Optical limiter device (20) according to any of claims 1-4 wherein said means comprises a thread arranged adjacent said second lens device for mounting on an optical device.

9. Optical limiter device (20) according to any of the claims above wherein the electromagnetic waves leaving said device have essentially the same intensity as when entering said device, unless the waves entering has an intensity over a certain predetermined level.

10. Optical limiter device (20) according to any of the claims above wherein said non linear device is activated at a predetermined intensity level.

11. Optical arrangement comprising an optical limiter device (20) of any of the claims 1-10 wherein the arrangement comprises an optical system such as a camera, an optical sensor, a binocular, or night vision goggles wherein said optical limiter device's focus is adjustable independently of the focus of the optical device (20).

## Patentansprüche

1. Optische Begrenzervorrichtung (20), umfassend ein nicht lineares Begrenzerelement, (3) eine erste Linsenvorrichtung und eine zweite Linsenvorrichtung, wobei die erste Linsenvorrichtung dazu eingerichtet ist, Strahlen elektromagnetischer Wellen zu empfangen und diese elektromagnetischen Wellen zu brechen, die zweite Linse dazu eingerichtet ist, im wesentlichen die elektromagnetischen Wellen in einer im wesentlichen umgekehrten Art und Weise zu brechen und das nicht lineare Begrenzerelement (3) dazu eingerichtet ist, in einer Position zwischen den Linsenvorrichtungen angeordnet zu werden, wobei diese Position ein Brennpunkt (8) der ersten und der zweiten Linsenvorrichtung ist, **dadurch gekennzeichnet, dass** der Brennpunkt (8) der ersten Linsenvorrichtung in Bezug auf die zweite Linse unabhängig eingestellt werden kann, wobei diese unabhängige Einstellung in Verwendung für ein optimales Zwischenbild im wesentlichen in einer Ebene sorgt, die in dem nicht linearen Begrenzerelement enthalten ist, und der Brennpunkt der zweiten Linsenvorrichtung derart unabhängig eingestellt werden kann, dass die elektromagnetischen Wellen, die die optische Begrenzervorrichtung (20) verlassen, derart eingestellt werden können, dass sie im wesentlichen denselben Winkel zu der optischen Achse haben, wie die elektromagnetischen Wellen, die auf die optische Begrenzervorrichtung (20) treffen, und die optische Begrenzervorrichtung (20) eine Einrichtung umfasst, die eine lösbare Anbringung der optischen Begrenzervorrichtung an einer Kamera, einem Fernglas, einem Nachtsichtgerät, einem optischen Sichtgerät oder Brillen gestattet.

2. Optische Begrenzervorrichtung (20) nach Anspruch 1, bei der ein Verbindungsarretiermechanismus enthalten ist, so dass, wenn der Arretiermechanismus arretiert ist, das Fokussieren einer der Linsenvorrichtungen das Fokussieren der anderen Linsenvorrichtung bewirkt.

3. Optische Begrenzervorrichtung (20) nach einem der Ansprüche 1 bis 2, bei der die erste Linsenvorrichtung ein Objektiv umfasst.

4. Optische Begrenzervorrichtung (20) nach einem der Ansprüche 1 bis 3, bei der die zweite Linsenvorrichtung ein Objektiv umfasst.

5. Optische Begrenzervorrichtung (20) nach einem der Ansprüche 1 bis 4, bei der die Einrichtung eine Schrauben- und Klemmenanordnung umfasst.

6. Optische Begrenzervorrichtung (20) nach einem der Ansprüche 1 bis 4, bei der die Einrichtung eine Klemmen- und Hakenanordnung umfasst.

7. Optische Begrenzervorrichtung (20) nach einem der Ansprüche 1 bis 4, bei der die Einrichtung eine Klettverschlussanordnung (hook and loop) umfasst.

8. Optische Begrenzervorrichtung (20) nach einem der Ansprüche 1 bis 4, bei der die Einrichtung ein Gewinde (thread) umfasst, das benachbart der zweiten Linsenvorrichtung angeordnet ist, um an einer optischen Vorrichtung angebracht zu werden.

9. Optische Begrenzervorrichtung (20) nach einem der obigen Ansprüche, bei der die elektromagnetischen Wellen, die die Vorrichtung verlassen, im wesentlichen dieselbe Intensität haben, wie wenn sie in die Vorrichtung eintreten, solange die eintretenden Wellen keine Intensität haben, die über einem bestimmten vorbestimmten Pegel liegt.

10. Optische Begrenzervorrichtung (20) nach einem der obigen Ansprüche, bei der die nicht lineare Vorrichtung bei einem vorbestimmten Intensitätspegel aktiviert wird.

11. Optische Anordnung, umfassend eine optische Begrenzervorrichtung (20) nach einem der Ansprüche 1 bis 10, wobei die Anordnung ein optisches System, wie etwa eine Kamera, einen optischen Sensor, ein Fernglas oder Nachtsichtgerät umfasst und der Brennpunkt der optischen Begrenzervorrichtung unabhängig von dem Brennpunkt der optischen Vorrichtung (20) eingestellt werden kann.

## Revendications

1. Dispositif de limiteur optique (20), comprenant un élément de limiteur non linéaire (3), un premier dispositif de lentille et un deuxième dispositif de lentille, ledit premier dispositif de lentille étant agencé pour recevoir des faisceaux d'ondes électromagnétiques et réfracter lesdites ondes électromagnétiques, ladite deuxième lentille étant agencée pour réfracter essentiellement lesdites ondes électromagnétiques d'une manière essentiellement inverse, ledit élément de limiteur non linéaire (3) étant agencé pour être positionné à une position entre lesdits dispositifs de lentille, cette position étant un foyer (8) desdits premier et deuxième dispositifs de lentille, **caractérisé en ce que** le foyer dudit premier dispositif de lentille (8) peut être ajustable de manière indépendante par rapport à la deuxième lentille, lequel ajustement indépendant, en utilisation, fournit une image intermédiaire optimale sensiblement dans un plan compris dans l'élément de limiteur non linéaire, et dans lequel le foyer dudit deuxième dispositif de lentille peut être ajusté de manière indépendante de sorte que les ondes électromagnétiques sortant du dispositif de limiteur optique (20) puissent être ajustées pour qu'elles aient sensiblement le même angle par rapport à l'axe optique que les ondes électromagnétiques frappant le dispositif de limiteur optique (20), et dans lequel le dispositif de limiteur optique (20) comprend des moyens pour permettre que le dispositif de limiteur optique puisse être monté de manière détachable sur une caméra, une binoculaire, des lunettes de vision de nuit, un viseur optique ou des lunettes.

2. Dispositif de limiteur optique (20) selon la revendication 1, dans lequel un mécanisme de verrouillage conjoint est compris de sorte que, lorsque le mécanisme de verrouillage est verrouillé, la mise au point de l'un des dispositifs de lentille génère une mise au point de l'autre dispositif de lentille.

3. Dispositif de limiteur optique (20) selon l'une quelconque des revendications 1 et 2, dans lequel le premier dispositif de lentille comprend un objectif.

4. Dispositif de limiteur optique (20) selon l'une quelconque des revendications 1 à 3, dans lequel le deuxième dispositif de lentille comprend un objectif.

5. Dispositif de limiteur optique (20) selon l'une quelconque des revendications 1 à 4, dans lequel lesdits moyens comprennent un agencement à vis et à pince.

6. Dispositif de limiteur optique (20) selon l'une quelconque des revendications 1 à 4, dans lequel lesdits moyens comprennent un agencement à pince et à crochet.

7. Dispositif de limiteur optique (20) selon l'une quelconque des revendications 1 à 4, dans lequel lesdits moyens comprennent un agencement à crochet et à boucle.

8. Dispositif de limiteur optique (20) selon l'une quelconque des revendications 1 à 4, dans lequel lesdits moyens comprennent un filetage agencé adjacent au dit deuxième dispositif de lentille pour un montage sur un dispositif optique.

9. Dispositif de limiteur optique (20) selon l'une quelconque des revendications précédentes, dans lequel les ondes électromagnétiques sortant dudit dispositif ont essentiellement la même intensité que lorsqu'elles entrent dans ledit dispositif, à moins que les ondes entrantes aient une intensité supérieure à un certain niveau prédéterminé.

10. Dispositif de limiteur optique (20) selon l'une quelconque des revendications précédentes, dans lequel ledit dispositif non linéaire est activé à un niveau d'intensité prédéterminé.

11. Agencement optique comprenant un dispositif de limiteur optique (20) selon l'une quelconque des revendications 1 à 10, dans lequel l'agencement comprend un système optique tel qu'une caméra, un capteur optique, une binoculaire, ou des lunettes de vision de nuit, dans lequel le foyer dudit dispositif de limiteur optique est ajustable de manière indépendante du foyer du dispositif optique (20).
